# EUROPÄISCHE PATENTSCHRIFT

(11) **EP 3 211 145 B1**
(45) Veröffentlichungstag und Bekanntmachung des Hinweises auf die Patenterteilung: **25.03.2020**
(21) Anmeldenummer: 17155267.2
(22) Anmeldetag: 08.02.2017
(51) Int. Cl.: E03D 11/14, F16B 7/04, E03C 1/322

(54) **BEFESTIGUNGSEINRICHTUNG FÜR EIN WANDHÄNGENDES SANITÄROBJEKT**
FIXING DEVICE FOR A SANITARY FIXTURE SUSPENDED ON THE WALL
DISPOSITIF DE FIXATION POUR UN OBJET SANITAIRE SUSPENDU AU MUR

(30) Priorität: 26.02.2016 DE 102016103393
(43) Veröffentlichungstag der Anmeldung: 30.08.2017
(73) Patentinhaber: fischerwerke GmbH & Co. KG, 72178 Waldachtal (DE)
(72) Erfinder: Martini, Michele, 30038 Spinea (VE) (IT); Miotto, Moreno, 35020 Brugine (PD) (IT)
(74) Vertreter: Suchy, Ulrich Johannes

(56) Entgegenhaltungen:
- EP-A1- 1 338 711
- EP-A1- 2 657 417
- EP-A2- 2 492 406
- WO-A1-2013/062493
- DE-A1-102013 112 005
- TR-U- 200 904 485

## Beschreibung

Die Erfindung betrifft eine Befestigungseinrichtung für ein wandhängendes, insbesondere aus Keramik bestehendes Sanitärobjekt, beispielsweise eine Toilette, mit den Merkmalen des Oberbegriffs des Anspruchs 1.

Die Offenlegungsschrift DE 10 2013 112 005 A1 offenbart eine Befestigungseinrichtung für eine wandhängende Toilette. Die bekannte Befestigungseinrichtung weist ein zylinderförmiges Widerlager und ein Befestigungsrohr auf. Ein axiales Durchgangsloch des Widerlagers bildet einen Aufnahmekanal für einen stangenförmigen Adapter. Das Befestigungsrohr ist koaxial mit dem Widerlager zusammensteckbar und weist einen Flansch an einem dem Widerlager fernen Ende auf. Zur Befestigung an einer Toilette wird das Befestigungsrohr von einer Rückseite durch ein Durchgangsloch in einer Rückwand der Toilette gesteckt und das Widerlager von einer gegenüberliegenden Seite aufgesetzt, so dass sich die Rückwand der Toilette zwischen dem Widerlager und dem Flansch des Befestigungsrohrs befindet. Als Rückseite wird eine Seite der Toilette bezeichnet, die bei wandhängender Befestigung an einer Wand anliegt oder jedenfalls der Wand zugewandt ist. Eine Rückwand der Toilette ist eine Wand oder Wandung an der Rückseite der Toilette. Das Durchgangsloch in der Rückwand der Toilette kann auch als Befestigungsloch bezeichnet werden. Der Adapter weist ein Gewindeloch auf, mit dem er auf eine Gewindestange geschraubt wird, die auskragend in der Wand verankert ist. Danach wird die Toilette mit dem Widerlager, das mittels des Befestigungsrohrs an der Rückwand der Toilette befestigt ist, auf den Adapter aufgesetzt und beispielsweise mit einer radial in das Widerlager geschraubten Madenschraube fixiert. Zur Befestigung einer Toilette sind zwei derartige Befestigungseinrichtungen vorgesehen.

Weitere gattungsgemäße Befestigungseinrichtungen sind in den Patentschriften TR 2009 04485 U, WO 2013/062493 A1, EP 1 338 711 A1, EP 2 657 417 A1 sowie EP 2 492 406 A2 offenbart.

Aufgabe der Erfindung ist, eine Verbindung eines Widerlagers und eines Befestigungsrohrs einer Befestigungseinrichtung für ein wandhängendes Sanitärobjekt der vorstehend erläuterten Art zu verbessern.

Gelöst wird diese Aufgabe durch die Merkmale des Anspruchs 1. Die erfindungsgemäße Befestigungseinrichtung weist ein Widerlager, ein Befestigungsrohr und einen insbesondere stangenförmigen Adapter auf. Der Adapter ist durch das Befestigungsrohr in einen Aufnahmekanal des Widerlagers einführbar, wobei das Einführen auch durch Aufsetzen des Widerlagers mit dem Befestigungsrohr auf den Adapter möglich ist. Beim Aufsetzen auf den Adapter kann das Widerlager mit dem Befestigungsrohr an einem wandhängend zu befestigenden Sanitärobjekt, beispielsweise einer Toilette, befestigt sein.

Zur Befestigung an einem Sanitärobjekt ist das Befestigungsrohr den Aufnahmekanal verlängernd am Widerlager anordenbar, beispielsweise sind das Widerlager und das Befestigungsrohr zusammensteckbar. Den Aufnahmekanal verlängernd bedeutet eine Anordnung des Befestigungsrohrs am Widerlager so, dass der insbesondere stangenförmige Adapter durch das Befestigungsrohr in den Aufnahmekanal des Widerlagers einführbar ist. Vorzugsweise fluchtet das Befestigungsrohr mit dem Aufnahmekanal, wenn das Befestigungsrohr am Widerlager angeordnet ist.

Das Befestigungsrohr weist ein Hintergreifelement auf, das einen Abstand vom Widerlager aufweist, wenn das Befestigungsrohr am Widerlager angeordnet ist. Das Hintergreifelement kann beispielsweise ein Flansch an einem dem Widerlager fernen Ende des Befestigungsrohrs sein. Zur Befestigung des Widerlagers an einem Sanitärobjekt wird das Befestigungsrohr von einer Rückseite durch ein Durchgangsloch als Befestigungsloch in einer Rückwand des Sanitärobjekts gesteckt und das Widerlager auf einer gegenüberliegenden Seite der Rückwand des Sanitärobjekts am Befestigungsrohr angeordnet, wozu insbesondere das Widerlager auf das Befestigungsrohr bzw. das Befestigungsrohr in das Widerlager gesteckt wird. Die Rückwand des Sanitärobjekts befindet sich jetzt zwischen dem Hintergreifelement des Befestigungsrohrs und dem Widerlager. Zur Anpassung an eine Dicke der Rückwand des Sanitärobjekts ist der Abstand zwischen dem Hintergreifelement des Befestigungsrohrs und dem Widerlager vorzugsweise einstellbar, beispielsweise durch unterschiedliche Stecktiefen des Widerlagers und des Befestigungsrohrs.

Zur wandhängenden Befestigung lässt sich das Sanitärobjekt mit dem Widerlager der erfindungsgemäßen Befestigungseinrichtung, das mit dem Befestigungsrohr an der Rückwand des Sanitärobjekts befestigt ist, auf den stangenförmigen Adapter aufsetzen, der auf eine Gewindestange geschraubt ist, die auskragend in einer Wand verankert ist.

Die erfindungsgemäße Befestigungseinrichtung weist eine Schiebeführung auf, die das Widerlager und das Befestigungsrohr in einer Längsrichtung des Aufnahmekanals im Widerlager verschiebbar aneinander führt. Die Schiebeführung hält das Widerlager und das Befestigungsrohr drehfest und in einer vorgegebenen Winkellage zueinander. Durch eine Winkelausrichtung des Befestigungsrohrs in einem Befestigungsloch des Sanitärobjekts ist eine Winkellage des Widerlagers in Bezug zum Sanitärobjekt festlegbar. Das ermöglicht eine Winkelausrichtung des Widerlagers so, dass beispielsweise eine Madenschraube, die zum Fixieren des Widerlagers auf dem Adapter radial in das Widerlager schraubbar ist, zum Ansetzen eines Inbusschlüssels mit einem Loch des Sanitärobjekts fluchtet. Ein solches Loch kann beispielsweise zur Befestigung eines Sitzrings und/oder eines Toilettendeckels am Sanitärobjekt vorhanden sein.

Eine bevorzugte Ausgestaltung der Erfindung weist eine Rückziehsperreinrichtung auf, die gegen ein Auseinanderbewegen, insbesondere ein Auseinanderziehen des Widerlagers und des Befestigungsrohrs, sperrt. Die Rückziehsperreinrichtung kann beispielsweise eine Rastnase aufweisen, die bei einem Zusammenstecken des Widerlagers und des Befestigungsrohrs an einem Hinterschnitt einrastet. Zu einer Verstellbarkeit in der Längsrichtung des Aufnahmekanals zum Zweck einer Einstellung des Abstands des Hintergreifelements des Befestigungsrohrs vom Widerlager kann die Rückziehsperreinrichtung eine Verzahnung mit sägezahnförmigen, in der Längsrichtung des Aufnahmekanals hintereinander angeordneten Zähnen aufweisen, die mit einem oder mehreren Gegenzähnen oder sonstigen Sperrelementen zusammenwirken. Die Aufzählung ist beispielhaft und nicht abschließend.

Aus spritzgießtechnischen Gründen sieht eine Ausgestaltung der Erfindung vor, ein Sperrelement der Rückziehsperreinrichtung an einem dem Befestigungsrohr zugewandten Ende des Widerlagers und/oder an einem dem Widerlager zugewandten Ende des Befestigungsrohrs vorzusehen.

Eine Ausgestaltung der Erfindung sieht vor, ein Sperrelement einer Rückziehsperreinrichtung bzgl. der Längsrichtung des Aufnahmekanals um etwa 90° zur Schiebeführung versetzt anzuordnen. Mit etwa ist ein Winkelbereich von ungefähr 45° in beiden Richtungen gemeint.

Vorzugsweise hält die Schiebeführung das Widerlager und das Befestigungsrohr knickstabil aneinander. Das ist möglich mit einer Schiebeführung, die eine Führungsschiene aufweist, die verschiebbar in einer Führungsnut geführt ist. Auf Knicken werden das Widerlager und das Befestigungsrohr beispielsweise bei einer Zugbeanspruchung zwischen dem Widerlager und dem Befestigungsrohr beansprucht, wenn eine exzentrisch angeordnete Rückziehsperreinrichtung gegen das Auseinanderziehen sperrt. Die erfindungsgemäße Schiebeführung wirkt einem Knicken des Befestigungsrohrs in Bezug auf das Widerlager entgegen bzw. erhöht eine Knicksteifigkeit des Widerlagers und des Befestigungsrohrs in Bezug zueinander.

Die Knickstabilität lässt sich steigern, indem die Schiebeführung ein Führungselement aufweist, das auskragt. Das Führungselement kann beispielsweise eine Führungsschiene sein, die vom Befestigungsrohr oder vom Widerlager auskragt und in der Längsrichtung des Aufnahmekanals verschiebbar in beispielsweise einer Führungsnut des Widerlagers oder des Befestigungsrohrs geführt ist. Es lässt sich dadurch eine Knickstabilität des Widerlagers und des Befestigungsrohrs in Bezug zueinander ohne oder mit einer kurzen Stecklänge des Widerlagers und des Befestigungsrohrs erreichen bzw. erhöhen.

Eine Ausgestaltung der Erfindung sieht eine Drehsicherungseinrichtung am Befestigungsrohr zu einer durch Formschluss drehfesten Festlegung in einer vorgegebenen Winkellage an einem Sanitärobjekt vor. Die Drehsicherungseinrichtung kann beispielsweise eine Kerbe oder dgl. sein, die mit einer Nase des Sanitärobjekts zusammenwirkt. Die Drehsicherungseinrichtung des Befestigungsrohrs legt eine Winkellage des Widerlagers in Bezug zum Sanitärobjekt fest. Die Winkellage des Widerlagers wird beispielsweise so festgelegt, dass eine radial in das Widerlager schraubbare Madenschraube zum Fixieren auf dem Adapter mit einem Loch des Sanitärobjekts fluchtet.

Eine Ausgestaltung der Erfindung sieht vor, dass die Befestigungseinrichtung eine Fixiereinrichtung zu einem Fixieren auf dem Adapter aufweist. Die Fixiereinrichtung kann beispielsweise die bereits angesprochene, radial in das Widerlager schraubbare Madenschraube aufweisen.

Außer der Befestigungseinrichtung als solches ist die Erfindung auch auf eine Befestigungsanordnung gerichtet, die außer der Befestigungseinrichtung ein mit ihr befestigbares bzw. befestigtes Sanitärobjekt und/oder eine auskragend in einer Wand verankerte Gewindestange, auf die der Adapter der Befestigungseinrichtung geschraubt und die Befestigungseinrichtung aufgesetzt ist, aufweist.

Die Erfindung wird nachfolgend anhand eines in der Zeichnung dargestellten Ausführungsbeispiels näher erläutert. Es zeigen:
- Figur 1: eine erfindungsgemäße Befestigungseinrichtung in einer perspektivischen Explosionsdarstellung;
- Figur 2: die Befestigungseinrichtung aus Figur 1 in teilweise zusammengesetztem Zustand;
- Figur 3: einen perspektivischen Axialschnitt der Befestigungseinrichtung aus Figur 2;
- Figur 4: die Befestigungseinrichtung aus Figur 3 ohne Adapter; und
- Figur 5: einen Achsschnitt einer erfindungsgemäßen Befestigungsanordnung mit der Befestigungseinrichtung aus Figuren 1 - 4.

Die in der Zeichnung dargestellte, erfindungsgemäße Befestigungseinrichtung 1 ist zur Befestigung einer wandhängenden Toilette oder allgemein eines wandhängenden Sanitärobjekts an einer Wand vorgesehen, wobei üblicherweise zwei Befestigungseinrichtungen 1 zur Befestigung eines Sanitärobjekts notwendig sind.

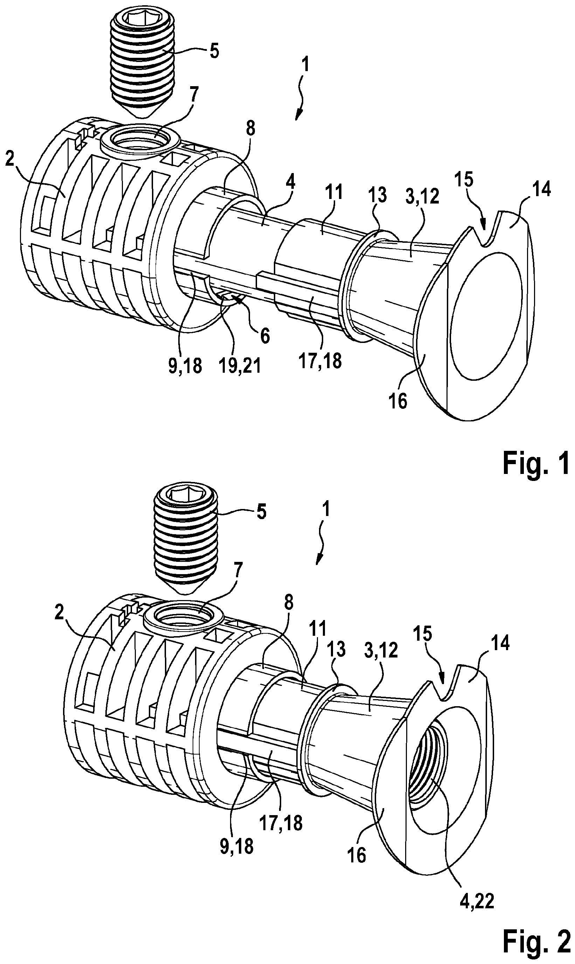

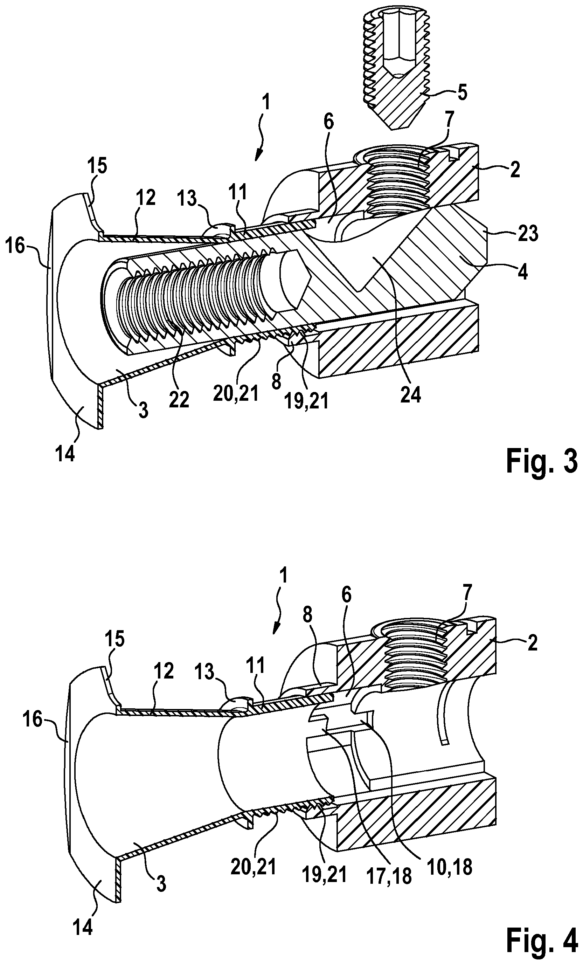

Die Befestigungseinrichtung 1 weist ein zylinderrohrförmiges Widerlager 2, ein Befestigungsrohr 3, einen stiftförmigen Adapter 4 (Figur 2 und 3) und eine Madenschraube als Fixierelement 5 auf. Das Widerlager 2 und das Befestigungsrohr 3 bestehen aus Kunststoff, der Adapter 4 und das Fixierelement 5 aus Metall, wobei die Werkstoffe nicht zwingend für die Erfindung sind.

Das Widerlager 2 ist außen verrippt, was der Herstellung durch Spritzgießen geschuldet ist. Es weist ein Durchgangsloch auf, das einen Aufnahmekanal 6 bildet, in den der Adapter 4 einführbar ist. Radial zum Aufnahmekanal 6 weist das Widerlager 2 ein in den Aufnahmekanal 6 mündendes Gewindeloch 7 auf, in den die das Fixierelement 5 bildende Madenschraube schraubbar ist. An einem Stirnende weist das Widerlager 2 einen rohrförmigen Kragen 8 auf, der den Aufnahmekanal 6 koaxial verlängert und der an einer Umfangsstelle einen achsparallelen Schlitz 9 aufweist, der an einem freien Ende des Kragens 8 offen ist und am anderen Ende in eine Führungsnut 10 übergeht, die achsparallel zum Aufnahmekanal 6 innen im Widerlager 2 verläuft und zum Aufnahmekanal 6 hin offen ist (Figur 4). Die Führungsnut 10 weist einen gleichen Querschnitt wie der Schlitz 9 auf und der Schlitz 9 kann als Teil der Führungsnut 10 oder als deren Verlängerung im Kragen 8 aufgefasst werden.

Das Befestigungsrohr 3 weist einen zylinderrohrförmigen Steckabschnitt 11 und einen trichterförmigen Einführabschnitt 12 an einem dem Widerlager 2 fernen Ende des Steckabschnitts 11 auf. Der Einführabschnitt 12 erweitert sich vom Widerlager 2 weg. Ein Außendurchmesser des Steckabschnitts 11 des Befestigungsrohrs 3 entspricht einem Innendurchmesser des Kragens 8 und des Aufnahmekanals 6 des Widerlagers 2, so dass das Befestigungsrohr 3 mit dem Steckabschnitt 11 in den Kragen 8 und den Aufnahmekanal 6 des Widerlagers 2 steckbar ist. Ein Flansch als Tiefenanschlag 13 am Übergang vom Steckabschnitt 11 zum Einführabschnitt 12 begrenzt eine Stecktiefe des Befestigungsrohrs 3 in das Widerlager 2. An einem durchmessergrößeren, dem Widerlager 2 fernen Ende des Einführabschnitts 12 weist das Befestigungsrohr 3 einen Flansch 14 mit einer Kerbe als Drehsicherungseinrichtung 15 und zwei einander gegenüber angeordneten Federflügeln 16 auf. Die Federflügel 16 sind kreissegmentförmige Teile des Flanschs 14, die etwas schräg in Richtung des Widerlagers 2 abgewinkelt sind und aufgrund einer Elastizität des Werkstoffs in achsparalleler Richtung federn.

Durch Stecken des Steckabschnitts 11 des Befestigungsrohrs 3 in den Kragen 8 bzw. den Aufnahmekanal 6 des Widerlagers 2 ist das Befestigungsrohr 3 den Aufnahmekanal 6 verlängernd am Widerlager 2 anordenbar. Das Stecken des Steckabschnitts 11 des Befestigungsrohrs 3 in den Kragen 8 bzw. den Aufnahmekanal 6 des Widerlagers 2 kann auch als Stecken des Steckabschnitts 11 bzw. des Befestigungsrohrs 3 in das Widerlager 2 aufgefasst werden.

Im Steckabschnitt 11 weist das Befestigungsrohr 3 eine achsparallele Rippe als Führungsschiene 17 auf, die auskragt, d. h. an einem dem Widerlager 2 zugewandten Ende über das Befestigungsrohr 3 vorsteht. Die Führungsschiene 17 weist einen gleichen Querschnitt wie der Schlitz 9 im Kragen 8 und die Führungsnut 10 im Aufnahmekanal 6 des Widerlagers 2 auf. Der Schlitz 9, die Führungsnut 10 und die Führungsschiene 17 bilden eine Schiebeführung 18, die das Widerlager 2 und das Befestigungsrohr 3 in einer Längsrichtung des Aufnahmekanals 6 verschiebbar aneinander führen und drehfest in einer vorgegebenen Winkellage zueinander halten. Aufgrund der Drehfestigkeit des Befestigungsrohrs 3 in Bezug auf das Widerlager 2 in der vorgegebenen Winkellage zueinander weisen auch die Kerbe im Flansch 14 an dem dem Widerlager 2 fernen Ende des Befestigungsrohrs 3, die die Drehsicherungseinrichtung 15 bildet, und das Gewindeloch 7 im Widerlager 2 zum Einschrauben der das Fixierelement 5 bildenden Madenschraube eine vorgegebene Winkellage zueinander in der Längsrichtung des Aufnahmekanals 6 gesehen auf. Im Ausführungsbeispiel befinden sich die die Drehsicherungseinrichtung 15 bildende Kerbe und das Gewindeloch 7 in einer gleichen Axialebene, sie können bei Ausführungsformen der Erfindung allerdings auch in der Längsrichtung des Aufnahmekanals 6 gesehen winkelversetzt zueinander sein.

Um 90° in Umfangsrichtung versetzt zu dem Schlitz 9 und der Führungsnut 10 weist das Widerlager 2 im Kragen 8 zwei widerhakenförmige Sperrelemente 19 auf, die aus spritzgießtechnischen Gründen an einem dem Befestigungsrohr 3 zugewandten Ende des Widerlagers 2 bzw. dessen Kragen 8 angeordnet sind. Die Sperrelemente 19 wirken zusammen mit einer Anzahl widerhakenförmiger Sperrelemente 20, die in Längsrichtung hintereinander außen und um 90° in Umfangsrichtung versetzt zur Führungsschiene 17 am Steckabschnitt 11 des Befestigungsrohrs 3 angeordnet sind. Die Sperrelemente 19, 20 des Widerlagers 2 und des Befestigungsrohrs 3 bilden eine Rückziehsperreinrichtung 21, die ein Stecken des Steckabschnitts 11 des Befestigungsrohrs 3 in den Kragen 8 und den Aufnahmekanal 6 des Widerlagers 2 zulassen und gegen ein Auseinanderziehen oder allgemein Auseinanderbewegen sperren. Bei einer Zugbeanspruchung des Widerlagers 2 und des Befestigungsrohrs 3 wirken die in Eingriff stehenden Sperrelemente 19, 20 der Rückziehsperreinrichtung 21 wie eine Art Scharnier, um die das auf Zug vom Widerlager 2 weg beanspruchte Befestigungsrohr 3 auf Knicken gegenüber dem Widerlager 2 beansprucht wird. Die um 90° in Umfangsrichtung zur Rückziehsperreinrichtung 21 versetzte Schiebeführung 18 mit der im Schlitz 9 und in der Führungsnut 10 verschiebbaren Führungsschiene 17 ist in dieser Richtung knickstabil und hält das Befestigungsrohr 3 knickstabil am Widerlager 2. Durch die knickstabile Schiebeführung 18 ist das Befestigungsrohr 3 auch bei kurzer Stecktiefe in den Kragen 8 des Widerlagers 2 knickstabil am Widerlager 2 gehalten. Die auskragende Führungsschiene 17 erhöht die Knickstabilität, weil sie eine Führungslänge, mit der die Führungsschiene 17 im Schlitz 7 und in der Führungsnut 10 gehalten ist, verlängert.

Der Adapter 4 weist ein axiales Sackloch mit Innengewinde als Gewindeloch 22 und gegenüber ein kegelstumpfförmiges Einführende 23 auf. Zwischen dem Einführende 23 und einem Grund des Gewindelochs 22 weist der Adapter 4 radial eine kegelförmige Ansenkung 24 auf, die mit der das Fixierelement 5 bildenden Madenschraube zusammenwirkt.

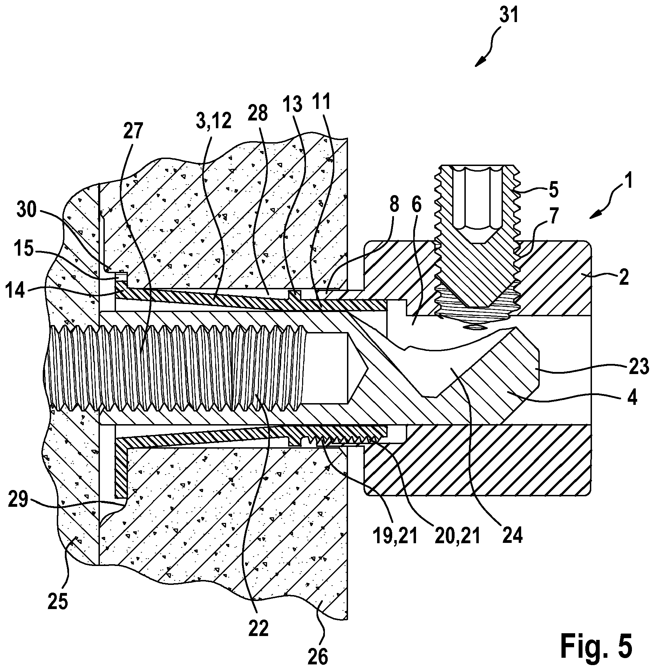

Zur Befestigung eines wandhängenden Sanitärobjekts, beispielsweise einer Toilette an einer Wand 25, werden zunächst das Widerlager 2 mit dem Befestigungsrohr 3 an einer Rückwand 26 der Toilette befestigt und eine Gewindestange 27 auskragend in der Wand 25 verankert. Auf die Gewindestange 27 wird der Adapter 4 geschraubt, wie es in Figur 5 zu sehen ist. Figur 5 zeigt lediglich einen Ausbruch einer Rückwand 26 der Toilette im Bereich der Befestigungseinrichtung 1. Die Rückwand 26 ist eine Wand der Toilette, die an der Wand 25 anliegt, an der die Toilette befestigt ist. Zur Befestigung weist die Rückwand 26 der Toilette ein Durchgangloch auf, das hier als Befestigungsloch 28 bezeichnet wird. Das Befestigungsrohr 3 der Befestigungseinrichtung 1 wird von einer Rückseite der Befestigungswand 26 durch das Befestigungsloch 28 gesteckt, so dass der das Hintergreifelement 14 bildende Flansch in eine flache Ansenkung 29 an einer Mündung des Befestigungslochs 28 gelangt. Die Rückseite ist eine Außenseite der Rückwand 26, die bei befestigter Toilette an der Wand 25 anliegt. In der Ansenkung 29 weist die Rückwand 26 der Toilette eine Nase 30 auf. Das Befestigungsrohr 3 wird so gedreht, dass die die Drehsicherungseinrichtung 15 bildende Kerbe des Hintergreifelements 14 auf die Nase 30 gelangt. Dadurch ist das Befestigungsrohr 3 in einer vorgegebenen Winkellage an der Toilette ausgerichtet.

Das Widerlager 2 wird von einer gegenüberliegenden Seite auf den Steckabschnitt 11 des Befestigungsrohrs 3 gesteckt, wobei die Führungsschiene 17 des Befestigungsrohrs 3 in den Schlitz 9 im Kragen 8 des Widerlagers 2 und bei tieferem Stecken in die Führungsnut 10 des Widerlagers 2 gelangt. Dadurch ist die Winkellage des Widerlagers 2 in Bezug auf das Befestigungsrohr 3 festgelegt, dessen Winkellage zur Toilette mittels der Drehsicherungseinrichtung 15 und der Nase 30 festgelegt ist. Dadurch ist auch eine Winkellage des Gewindelochs 7 des Widerlagers 2 in Bezug zur Toilette festgelegt. Die Festlegung ist so, dass das Gewindeloch 7 des Widerlagers 2 beispielsweise mit einem Loch der Toilette fluchtet, so dass durch das Loch beispielsweise ein Inbusschlüssel an der das Fixierelement 5 bildenden Madenschraube zum Drehen der Madenschraube ansetzbar ist. Ein solches Loch der Toilette kann beispielsweise ein Befestigungsloch für einen Sitzring und/oder einen Deckel an einer Oberseite der Toilette sein.

Durch das Stecken des Widerlagers 2 auf den Steckabschnitt 11 des Befestigungsrohrs 3 wird ein Abstand des das Hintergreifelement 14 bildenden Flanschs des Befestigungsrohrs 3 vom Widerlager 2 verkleinert. Die Rückziehsperreinrichtung 21 verhindert ein Auseinanderbewegen. Das Widerlager 2 und das Befestigungsrohr 3 werden so tief zusammengesteckt, dass die Federflügel 16 mit Vorspannung an einem Grund der Ansenkung 29 auf der Rückseite der Rückwand 26 der Toilette anliegen und die Befestigungseinrichtung 1 in Längsrichtung des Befestigungslochs 28 und des Aufnahmekanals 6 mit Vorspannung der Federflügel 16 an der Rückwand 26 der Toilette anliegt.

Abschließend wird die Toilette so gegen die Wand 25 verbracht, dass der Adapter 4 durch das Befestigungsrohr 3 in den Aufnahmekanal 6 des Widerlagers 2 gelangt, was auch als Einführen des Adapters 4 in den Aufnahmekanal 6 aufgefasst werden kann. Schließlich wird die das Fixierelement 5 bildende Madenschraube in das Gewindeloch 7 des Widerlagers 2 geschraubt, so dass ihre Spitze in die konische Ansenkung 24 des Adapters 4 gelangt und die Toilette an der Wand 25 fixiert. Zusammen mit der Toilette oder allgemein dem Sanitärobjekt, das das Durchgangsloch als Befestigungloch 28 in seiner Rückwand 26 aufweist und/oder mit der auskragend in der Wand 25 verankerten Gewindestange 27, kann die erfindungsgemäße Befestigungseinrichtung auch als erfindungsgemäße Befestigungsanordnung 31 aufgefasst werden. Die das Fixierelement 5 bildende Madenschraube, die über das Widerlager 2 die Toilette auf dem Adapter 4 fixiert, kann allgemein auch als Fixiereinrichtung aufgefasst werden.

### Bezugszeichenliste

- 1: Befestigungseinrichtung
- 2: Widerlager
- 3: Befestigungsrohr
- 4: Adapter
- 5: Fixierelement
- 6: Aufnahmekanal
- 7: Gewindeloch
- 8: Kragen
- 9: Schlitz
- 10: Führungsnut
- 11: Steckabschnitt
- 12: Einführabschnitt
- 13: Tiefenanschlag
- 14: Hintergreifelement
- 15: Drehsicherungseinrichtung
- 16: Federflügel
- 17: Führungsschiene
- 18: Schiebeführung
- 19: Sperrelement des Widerlagers 2
- 20: Sperrelement des Befestigungsrohrs 3
- 21: Rückziehsperreinrichtung
- 22: Gewindeloch
- 23: Einführende
- 24: Ansenkung
- 25: Wand
- 26: Rückwand
- 27: Gewindestange
- 28: Befestigungsloch
- 29: Ansenkung
- 30: Nase
- 31: Befestigungsanordnung

## Patentansprüche

1. Befestigungseinrichtung für ein wandhängendes Sanitärobjekt an einer Wand, mit einem Widerlager (2), das einen Aufnahmekanal (6) aufweist, mit einem Befestigungsrohr (3), das den Aufnahmekanal (6) verlängernd am Widerlager (2) anordenbar ist und ein Hintergreifelement (14) mit Abstand vom Widerlager (2) aufweist, mit einem insbesondere stangenförmigen Adapter (4), der durch das Befestigungsrohr (3) in den Aufnahmekanal (6) des Widerlagers (2) einführbar ist, und der ein Gewindeloch (22) zum Aufschrauben auf eine Gewindestange (27) aufweist, und mit einer Schiebeführung (18), die das Widerlager (2) und das Befestigungsrohr (3) in Längsrichtung des Aufnahmekanals (6) verschiebbar aneinander führt, **dadurch gekennzeichnet, dass** die Schiebeführung (18) das Widerlager (2) und das Befestigungsrohr (3) drehfest und in einer vorgegebenen Winkellage zueinander hält.

2. Befestigungseinrichtung nach Anspruch 1, **dadurch gekennzeichnet, dass** die Befestigungseinrichtung (1) eine Rückziehsperreinrichtung (21) aufweist, die gegen ein Auseinanderbewegen des Widerlagers (2) und des Befestigungsrohrs (3) sperrt.

3. Befestigungseinrichtung nach Anspruch 2, **dadurch gekennzeichnet, dass** die Rückziehsperreinrichtung (21) ein Sperrelement (19, 20) an einem dem Befestigungsrohr (3) zugewandten Ende des Widerlagers (2) und/oder an einem dem Widerlager (2) zugewandten Ende des Befestigungsrohrs (3) aufweist.

4. Befestigungseinrichtung nach Anspruch 2 oder 3, **dadurch gekennzeichnet, dass** die Rückziehsperreinrichtung (21) ein Sperrelement (19, 20) aufweist, das bezüglich der Längsrichtung des Aufnahmekanals (6) um etwa 90° zur Schiebeführung (18) versetzt angeordnet ist.

5. Befestigungseinrichtung nach einem der vorhergehenden Ansprüche, **dadurch gekennzeichnet, dass** die Schiebeführung (18) eine Führungsschiene (17) aufweist, die verschiebbar in einer Führungsnut (10) geführt ist und das Widerlager (2) und das Befestigungsrohr (3) knickstabil aneinander hält.

6. Befestigungseinrichtung nach einem der vorhergehenden Ansprüche, **dadurch gekennzeichnet, dass** ein Führungselement (17) der Schiebeführung (18) auskragt.

7. Befestigungseinrichtung nach einem der vorhergehenden Ansprüche, **dadurch gekennzeichnet, dass** das Befestigungsrohr (3) eine Drehsicherungseinrichtung (15) zu einer durch Formschluss drehfesten Festlegung in einer vorgegebenen Winkellage an einem Sanitärobjekt aufweist.

8. Befestigungseinrichtung nach einem der vorhergehenden Ansprüche, **dadurch gekennzeichnet, dass** die Befestigungseinrichtung (1) eine Fixiereinrichtung (5) zu einer Fixierung des Widerlagers (2) auf dem Adapter (4) aufweist.

9. Befestigungsanordnung mit einer Befestigungseinrichtung (1) nach einem der vorhergehenden Ansprüche und einem Sanitärobjekt, das ein Durchgangsloch als Befestigungsloch (28) aufweist, in dem das Befestigungsrohr (3) der Befestigungseinrichtung (1) aufgenommen ist, so dass das Hintergreifelement (14) des Befestigungsrohrs (3) das Sanitärobjekt auf einer Seite und das Widerlager (2) der Befestigungseinrichtung (1) das Sanitärobjekt auf einer anderen Seite des Befestigungslochs (28) hintergreifen und/oder einer auskragend in einer Wand (25) verankerten Gewindestange (27), auf die der Adapter (4) geschraubt und durch das Befestigungsrohr in den Aufnahmekanal (6) des Widerlagers (2) eingeführt ist.

## Claims

1. Fixing device for a wall-mounted sanitaryware item on a wall, having a counter-bearing (2) which has a receiving channel (6), having a fixing tube (3) which can be arranged on the counter-bearing (2) as an extension of the receiving channel (6) and has an engagement element (14) spaced apart from the counter-bearing (2), having an adapter, especially a rod-shaped adapter (4), which is introducible through the fixing tube (3) into the receiving channel (6) of the counter-bearing (2) and which has a threaded hole (22) for screwing onto a threaded rod (27), and having a sliding guide (18) which guides the counter-bearing (2) and the fixing tube (3) so as to be displaceable along one another in a longitudinal direction of the receiving channel (6), **characterised in that** the sliding guide (18) holds the counter-bearing (2) and the fixing tube (3) fixed against relative rotation and in a predetermined angular position relative to one another.

2. Fixing device according to claim 1, **characterised in that** the fixing device (1) has a pull-out-blocking device (21) which prevents the counter-bearing (2) and the fixing tube (3) from moving apart.

3. Fixing device according to claim 2, **characterised in that** the pull-out-blocking device (21) has a blocking element (19, 20) at an end of the counter-bearing (2) that faces towards the fixing tube (3) and/or at an end of the fixing tube (3) that faces towards the counter-bearing (2).

4. Fixing device according to claim 2 or 3, **characterised in that** the pull-out-blocking device (21) has a blocking element (19, 20) which is arranged offset by about 90° relative to the sliding guide (18) with respect to the longitudinal direction of the receiving channel (6).

5. Fixing device according to any one of the preceding claims, **characterised in that** the sliding guide (18) has a guide rail (17) that is displaceably guided in a guide groove (10) and holds the counter-bearing (2) and the fixing tube (3) against one another so as to be resistant to buckling.

6. Fixing device according to any one of the preceding claims, **characterised in that** a guide element (17) of the sliding guide (18) is cantilevered.

7. Fixing device according to any one of the preceding claims, **characterised in that** the fixing tube (3) has an anti-rotation device (15) for the purpose of fixing to a sanitaryware item in a predetermined angular position fixed against rotation by interlocking engagement.

8. Fixing device according to any one of the preceding claims, **characterised in that** the fixing device (1) has a securing device (5) for securing the counter-bearing (2) on the adapter (4).

9. Fixing arrangement having a fixing device (1) according to any one of the preceding claims and a sanitaryware item which has a through-hole as fixing hole (28) in which the fixing tube (3) of the fixing device (1) is accommodated, so that the engagement element (14) of the fixing tube (3) engages behind the sanitaryware item on one side and the counter-bearing (2) of the fixing device (1) engages behind the sanitaryware item on another side of the fixing hole (28), and/or a threaded rod (27) anchored in a cantilevered position in a wall (25), onto which rod the adapter (4) has been screwed and introduced through the fixing tube into the receiving channel (6) of the counter-bearing (2).

## Revendications

1. Dispositif de fixation, à une paroi, d'un objet sanitaire à suspension murale, comprenant un arrêtoir (2) pourvu d'un canal de réception (6) ; une tubulure de fixation (3) qui peut être mise en place sur ledit arrêtoir (2), en prolongeant ledit canal de réception (6), et comporte un élément (14) d'emprisonnement par-derrière à distance dudit arrêtoir (2) ; un adaptateur (4) notamment en forme de tige, qui peut être inséré dans ledit canal de réception (6) dudit arrêtoir (2), par l'intermédiaire de ladite tubulure de fixation (3), et est muni d'un trou taraudé (22) en vue du vissage sur une tige filetée (27) ; et un guide coulissant (18) qui guide, l'un sur l'autre, ledit arrêtoir (2) et ladite tubulure de fixation (3) avec faculté de coulissement dans la direction longitudinale dudit canal de réception (6), **caractérisé par le fait que** le guide coulissant (18) maintient l'arrêtoir (2) et la tubulure de fixation (3) avec verrouillage rotatif et dans une position angulaire préétablie, l'un par rapport à l'autre.

2. Dispositif de fixation selon la revendication 1, **caractérisé par le fait que** ledit dispositif de fixation (1) comporte un dispositif (21) de blocage antirétraction, qui interdit un mouvement de dissociation mutuelle de l'arrêtoir (2) et de la tubulure de fixation (3).

3. Dispositif de fixation selon la revendication 2, **caractérisé par le fait que** le dispositif (21) de blocage antirétraction comporte un élément de blocage (19, 20) à une extrémité de l'arrêtoir (2) tournée vers la tubulure de fixation (3), et/ou à une extrémité de ladite tubulure de fixation (3) qui pointe vers ledit arrêtoir (2).

4. Dispositif de fixation selon la revendication 2 ou 3, **caractérisé par le fait que** le dispositif (21) de blocage antirétraction comporte un élément de blocage (19, 20) agencé, par rapport à la direction longitudinale du canal de réception (6), avec décalage d'environ 90° vis-à-vis du guide coulissant (18).

5. Dispositif de fixation selon l'une des revendications précédentes, **caractérisé par le fait que** le guide coulissant (18) comporte une glissière de guidage (17) qui est guidée à coulissement dans une rainure de guidage (10) et maintient, l'un sur l'autre, l'arrêtoir (2) et la tubulure de fixation (3) avec stabilité au flambage.

6. Dispositif de fixation selon l'une des revendications précédentes, **caractérisé par le fait qu'**un élément de guidage (17) du guide coulissant (18) est en débord.

7. Dispositif de fixation selon l'une des revendications précédentes, **caractérisé par le fait que** la tubulure de fixation (3) est dotée d'un dispositif d'arrêt rotatoire (15) dévolu à l'immobilisation sur un objet sanitaire, dans une position angulaire préétablie, avec verrouillage rotatif instauré par complémentarité de formes.

8. Dispositif de fixation selon l'une des revendications précédentes, **caractérisé par le fait que** ledit dispositif de fixation (1) comporte un dispositif (5) de consignation à demeure, en vue de consigner l'arrêtoir (2) à demeure sur l'adaptateur (4).

9. Ensemble de fixation comprenant un dispositif de fixation (1) conforme à l'une des revendications précédentes, et un objet sanitaire muni, en tant que trou de fixation (28), d'un trou traversant dans lequel la tubulure de fixation (3) dudit dispositif de fixation (1) est logée de façon telle que l'élément (14) d'emprisonnement par-derrière de ladite tubulure de fixation (3) emprisonne l'objet sanitaire par-derrière, sur un côté, et que l'arrêtoir (2) dudit dispositif de fixation (1) emprisonne ledit objet sanitaire par-derrière, sur un autre côté dudit trou de fixation (28) ; et/ou une tige filetée (27) qui est ancrée en porte-à-faux dans une paroi (25), et sur laquelle l'adaptateur (4) est vissé et est inséré, par l'intermédiaire de ladite tubulure de fixation, dans le canal de réception (6) dudit arrêtoir (2).
